Europäisches Patentamt

European Patent Office

Office européen des brevets

(19)

(11) Veröffentlichungsnummer: **0 348 525**
**A1**

(12)

# EUROPÄISCHE PATENTANMELDUNG

veröffentlicht nach Art. 158 Abs. 3 EPÜ

(21) Anmeldenummer: 89900681.1

(22) Anmeldetag: 28.09.88

Daten der zugrundeliegenden internationalen Anmeldung:

(86) Internationale Anmeldenummer:
PCT/SU 88/00192

(87) Internationale Veröffentlichungsnummer:
WO 89/05703 (29.06.89 89/14)

(51) Int. Cl.⁴: **B 23 F 19/00**, B 24 B 53/06

(30) Priorität: 24.12.87 SU 4342342

(43) Veröffentlichungstag der Anmeldung: 03.01.90
Patentblatt 90/1

(84) Benannte Vertragsstaaten: CH DE FR GB IT LI SE

(71) Anmelder: SARATOVSKOE SPETSIALNOE
KONSTRUKTORSKOE BJURO
ZUBOOBRABATYVAJUSCHIKH STANKOV
SARATOVSKOGO STANKOSTROITELNOGO
PROIZVODSTVENNOGO, OBIEDINENIA ul.
Ogorodnaya, 162, Saratov 410036 (SU)

(72) Erfinder: ABYSOV, Nikolai Anatolievich, ul.
Millerovskaya, 18-71, Saratov, 410036 (SU)
Erfinder: BEZGODOV, Valery Alexandrovich, ul.
Rabochaya, 53-7, Saratov, 410600 (SU)
Erfinder: BELGORODSKY, Vladimir Semenovich,
ul. 7 Nagornaya, 12-73, Saratov, 410001 (SU)
Erfinder: PLOTNIKOV, Nikolai Dmitrievich, ul.
Antonova-Saratovskogo, 18/40-263,
Saratov, 410030 (SU)

(74) Vertreter: Nix, Frank Arnold, Dr., Kröckelbergstrasse 15,
D-6200 Wiesbaden (DE)

(54) **WERKZEUGMASCHINE ZUM HERSTELLEN UND ABRICHTEN EINES**

(57) Die Werkzeugmaschine zum Herstellen und Abrichten eines Werkzeuges und Fertigbearbeiten von Zahnrädern enthält drei Spindeln (4, 5, 15), die in eigenen Spindelstöcken (2, 3) bzw. einem Träger (17) gehaltert und mit Antrieben (8, 11) versehen sind, wobei zwei der Spindeln (4, 5) synchron miteinander verbunden sind und die dritte Spindel (15) im Träger (17) frei drehbar und axial verschiebbar ist, welcher radial- und winkeleinstellbar ist.

## WERKZEUGMASCHINE ZUM HERSTELLEN UND ABRICHTEN EINES WERKZEUGES UND FERTIGBEARBEITEN VON ZAHNRÄDERN

### Technisches Gebiet

Die Erfindung bezieht sich auf den Maschinenbau und zwar auf das Gebiet der Herstellung von Präzisionszahnrädern und betrifft insbesondere Werkzeugmaschinen zum Herstellen und Abrichten eines Werkzeuges und Fertigbearbeiten von Zahnrädern.

### Zugrundeliegender Stand der Technik

Es ist eine Werkzeugmaschine (SU, A, 848201) zur Fertigbearbeitung von Kegelrädern mit Kreisbogenzähnen bekannt. Die Werkzeugmaschine enthält einen Werkzeugträger mit einer Vorrichtung zur Hypoidverschiebung der Werkzeugspindel und einen Werkstückträger, der die Spindel trägt, an der ein Schlitten mit einer zusätzlichen Spindel angebracht ist, welche die Möglichkeit für die hypoide Verschiebung gegenüber der Drehachse des Werkstückträgers und die Abwälzvorrichtung des Werkstücks hat. Um die Drehung des Werkzeuges und des Werkstücks zu synchronisieren, ist ein Summationswerk am Schlitten angebracht. Für die Einstellung des hypoiden Abstandes des Werkstücks sorgt ein Exzenterwerk. Doch das Vorhandensein einer grossen Anzahl von Freiheitsgrad der Werkstückspindel, eine zusätzliche Spindel mit zusätzlicher Hypoidverschiebung gegenüber der Hauptspindel des Werkstücksträgers und die Vorrichtung für die Abwälzbewegung, alles das senkt die Steifigkeit der Werkzeugmaschine und wirkt sich somit negativ auf die Bearbeitungsgenauigkeit aus. Darüber hinaus gewährleistet das Summationswerk, das die Drehung der beiden Spindeln synchronisiert, keine streng abgestimmte Drehung des Werkstücks und des Werkzeuges in dem gesamten Bereich der Abwälzbewegung, was einen zusätzlichen Fehler in die Bearbeitungsgenauigkeit hineinbringt.

Es ist eine weitere Werkzeugmaschine (DE, A1, 3 506 499) zur Präzisionsbearbeitung von Zahnrädern bekannt. In dieser Werkzeugmaschine bilden das Werk-

- 2 -

zeug und das Werkstück ein Kegelzahnradpaar, bei dem jedes Zahnrad an dem einen Ende seiner Spindel angebracht ist. An dem anderen Ende jeder Spindel ist je ein führendes schrägverzahntes Stirnrad angebracht, die ein Schraubenpaar bilden. Die Führungsräder sind koaxial zum Werkzeug und dem Werkstück angeordnet und besitzen dieselbe Übersetzung wie das Werkzeug-Werkstück-Paar. Eine solche Ausführung der Werkzeugmaschine, bei der die kinematische Wechselwirkung zwischen den Spindeln des Werkstücks und des Werkzeuges und deren Arbeitsvorschub bei der Bearbeitung sichergestellt wird, beschränkt die Möglichkeit der Auswahl der geometrischen Kennwerte des Zahnwerkzeuges, weil für jede geforderte Variante der Übersetzung des Werkzeug-Werkstück-Zahnpaares notwendig ist, einen Satz der Führungsräder mit derselben Übersetzung zu fertigen. Bei der Benutzung eines Kegelradpaares als Führungsräder erschwert der Mechanismus für die Vorgabe des Arbeitsvorschubs die Konstruktion der Werkzeugmaschine so weit, dass die höchste Steifigkeit der Werkzeugmaschine nicht imstande ist, eine qualitätsgerechte Bearbeitung der Präzisionszahnräder sicherzustellen. Die Herstellung des Werkzeuges in Form eines verzahnten Schleifrades auf dieser Werkzeugmaschine ohne zusätzliche Vorrichtungen ist unmöglich.

Am nächsten kommt der zum Patent angemeldeten Werkzeugmaschine eine Werkzeugmaschine (SU, A, 671950) zur Fertigbearbeitung von Kegel- und Hypoidrädern, in der die Werkstück- und die Werkzeugspindel mit Antrieben versehen sind, die zum kinematischen Zusammenwirken miteinander elektrisch gekoppelt sind. Die Übersetzung des Werkstück-Werkzeug-Zahnradtriebs wird von den Wechselrädern der Teilungsschere, mit der die Werkzeugspindel ausgerüstet ist, gesichert. Die Werkzeugmaschine besitzt keine Vorrichtung für den Arbeitsvorschub, der bei der Herstellung eines verzahnten Schleifwerkzeuges notwendig ist. Wenn als Vorrichtung für den Arbeitsvorschub die Vorrichtung für die Einstellbewegung des Spindelstocks einer der Spindeln zum Einsatz kommt, kann man auf dieser Werkzeugmaschine in einem Zyklus das verzahnte Schleifwerkzeug zur Bearbeitung nur eines Elementes des Zahnradtriebs anfertigen. Zur Herstellung des Werkzeuges für das andere Element des Zahnradtriebs muss man die Werkzeugmaschine umrüsten, d.h. das Geschwindigkeitsverhältnis der Werkstückspindel zur Werkzeugspindel, die Bezugsabstände des Werkzeuges und des Werkstücks usw. ändern. Der gleiche Nachteil macht sich auch bei der Fertigbearbeitung der Zahnräder auf dieser Werkzeugmaschine bemerkbar.

Offenbarung der Erfindung

Der Erfindung liegt die Aufgabe zugrunde, eine derartige Werkzeugmaschine zum Herstellen und Abrichten eines Werkzeuges und Fertigbearbeiten von Zahnrädern zu schaffen, auf der nicht nur die Fertigbearbeitung von Präzisionszahnrädern sondern auch durch Schaffung eines zusätzlichen Axialvorschubs des Werkzeuges die Herstellung und die Abrichtung des Schleifwerkzeuges, mit dem diese Fertigbearbeitung erfolgt, mit hoher Genauigkeit durchgeführt werden können.

Diese Aufgabe wird dadurch gelöst, dass die Werkzeugmaschine zum Herstellen und Abrichten eines Werkzeuges und Fertigbearbeiten von Präzisionszahnrädern, enthaltend eine erste und eine zweite Spindel mit synchron miteinander gekoppelten Eigenantrieben, welche Spindeln in jeweiligen Spindelstöcken befestigt sind, erfindungsgemäss mit einer dritten Spindel versehen ist, die frei·drehbar und axial verschiebbar im eigenen Träger untergebracht ist, der in vertikaler und horizontaler Richtung radial verschiebbar und um einen vorgegebenen Winkel schwenkbar angeordnet ist.

Ferner kann die Werkzeugmaschine mit einer Platte versehen werden, auf der der Träger der dritten Spindel in vertikaler und horizontaler Richtung radial verschiebbar angebracht ist, wobei die Platte mit den Spindelstöcken der ersten und der zweiten Spindel winkelbewegbar kinematisch verbunden ist.

Die Platte, die die dritte Werkzeugspindel trägt und beide Spindelstöcke des Werkstücks verbindet, ermöglicht eine viel höhere Steifigkeit der Werkzeugmaschine und gestattet es, das Werkzeug mit hoher Genauigkeit herzustellen, es abzurichten und mit ihm die Fertigbearbeitung von Präzisionszahnradtrieben durchzuführen.

Kurze Beschreibung der Zeichnungen

Des weiteren wird die Erfindung an Hand eines konkreten Ausführungsbeispiels und der beigefügten Zeichnungen näher erläutert. In den Zeichnungen zeigt:

Fig. 1  im Grundriss die Werkzeugmaschine zum Herstellen und Abrichten eines Werkzeuges und Fertigbearbeiten von Zahnrädern, gemäss der Erfindung;

Fig. 2  die  Ansicht in Pfeilrichtung  A  der Fig. Fig. 1;

Fig. 3  die  Ansicht in Pfeilrichtung  B  der Fig. 1.

Beste Ausführungsform der Erfindung

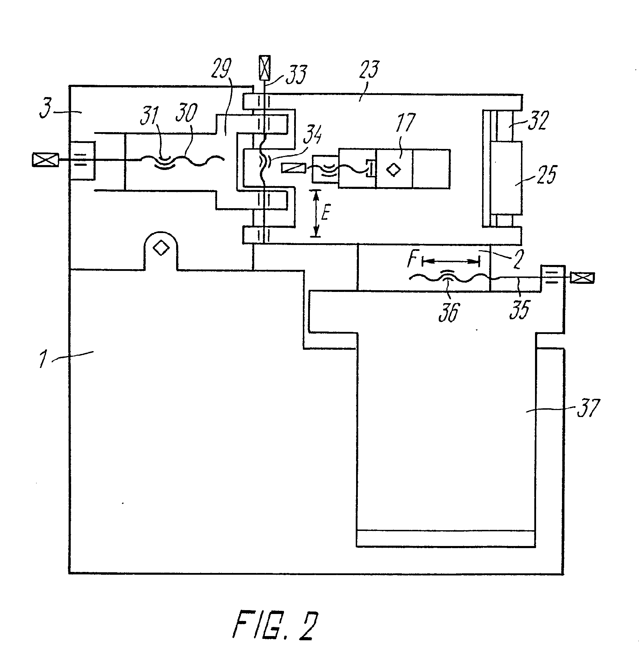

Die zum Patent angemeldete Werkzeugmaschine zum Herstellen und Abrichten eines Werkzeuges und Fertigbearbeiten von Zahnrädern enthält am Bett 1 (Fig. 1) angebrachte Spindelstöcke 2 und 3 mit der ersten und der zweiten Spindel 4 bzw. 5 mit Eigenantrieben. Der Antrieb der Spindel 4 enthält einen hypoiden Zahnradtrieb 6 und 7 mit einer  grossen Übersetzungszahl und einen Elektromotor 8, während der Antrieb der Spindel 5 einen gleichen Zahnradtrieb 9 und 10 und einen Elektromotor 11 enthält. Die Elektromotoren 8 und 11 sind zum synchronen Lauf miteinander elektrisch gekoppelt (in Fig. nicht gezeigt). An den Spindeln 4 und 5 sind ein Ritzel 12 und ein Zahnrad 13, die die Elemente des Zahnradtriebes sind, angebracht.

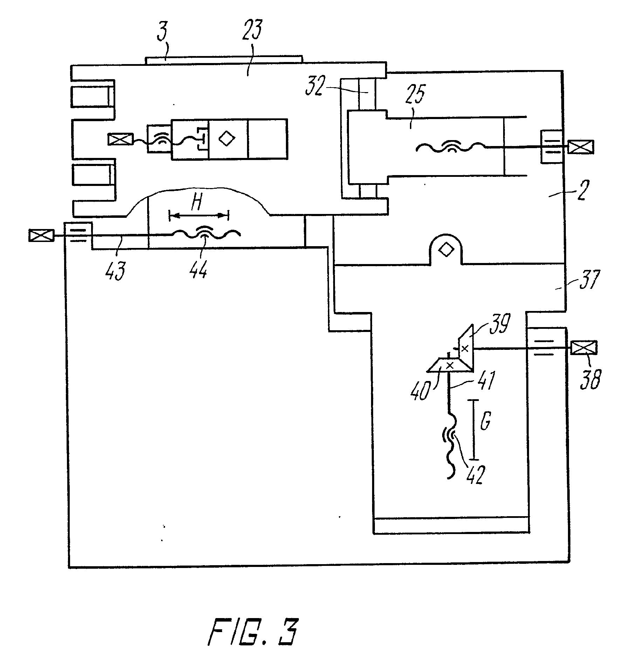

Das Werkzeug 14 in Form eines flachen verzahnten Schleifrades mit     konzentrisch angeordneten Zahnkränzen (in Fig. nicht gezeigt), deren Zähne ein Profil aufweisen, das mit den Zähnen des Ritzels 12 und des Zahnrades 13 gegenseitig abwälzbar ist, ist an der im Gehäuse 16 montierten frei drehbaren dritten Spindel 15 angebracht. Das Gehäuse 16 ist in einem Werkzeugträger 17 untergebracht und mit diesem mittels einer Feder 18 verbunden. Mit dem Gehäuse 16 wirkt eine Schraube 19 mit einer Begrenzungsmutter 20 zusammen. Der Werkzeugträger 17 ist zur radialen Verschiebung in horizontaler Richtung über eine Leitspindel 21 und eine Mutter 22 mit einer Platte 23 verbunden. Die Platte 23 ist über eine Gelenkverbindung 24 mit einem Schlitten 25 verbunden, der sich im Spindelstock 2 in Pfeilrichtung C mit Hilfe einer Leitspindel 26 und einer Mutter 27 bewegen kann. Über eine Gelenkverbindung 28 ist die Platte 23 mit einem Schlitten 29 verbunden, der sich im Spindelstock 3 in Pfeilrichtung D mit Hilfe einer Leitspindel 30 und einer Mutter 31 bewegen kann. Die Gelenkverbindung 24 enthält einen Stab 32 (Fig. 2), der in der Platte 23 starr befestigt ist. Der Stab 32 ist gemeinsam mit dem Schlitten 25 mittels einer Spannvorrichtung (in Fig. nicht gezeigt) feststellbar. Die Gelenkverbindung 28 besteht aus einer Leitspindel 33, die mit einer Mutter 34 verbunden ist, die in der Platte befestigt ist, wodurch die Platte 23 mit dem darauf angebrachten Werkzeugträger 17 sich vertikal in Pfeilrichtung E bewegen kann, d.h. die Möglichkeit einer hypoiden Verschiebung des Werkzeuges 14 hat. Der Verschiebung des Spindelstocks 2 in Pfeilrichtung F dient eine Leitspindel 35 mit einer Mutter 36. In vertikaler Richtung nach Pfeil G (Fig. 3) bewegt sich der Spindelstock 2 gemeinsam mit einem Ständer 37 mittels eines Griffs 38, eines Zahnradtriebes 39,40, einer Leitspindel 41 und einer Mutter 42. Der Bewegung des Spindelstocks 3 in Pfeilrichtung H dient eine Leitspindel 43 und eine Mutter 44.

Die erfindungsgemässe Werkzeugmaschine arbeitet in zwei Betriebsweisen.

Für den Betrieb der Anfertigung des Werkzeuges 14 (Fig. 1) werden die Spindelstöcke 2 und 3 mit dem an der Spindel 4 bzw. 5 angebrachten Ritzel 12 bzw. Zahnrad 13 (benutzt wird ein Musterzahnradtrieb aus einer für die weitere Bearbeitung vorbestimmten Partie) auf erfordeliche Bezugsabstände, die auf rechnerischem Wege ermittelt worden sind, angestellt. Zur Einstellung der Spindelstöcke 2 und 3 kommen die Leitspindeln 35 bzw. 43 zum Einsatz. Durch Schwenken der Platte 23 um die Gelenkverbindung 28 führt man die Spindel 15 aus der Bearbeitungszone heraus und spannt man an dieser das Rohstück des Werkzeuges 14, d.h. eine Standardschleifscheibe auf, wonach man die Platte 23 in Arbeitsposition bringt und den Stab 32 am Schlitten 25 feststellt. Durch Bewegen der Schlitten 25 und 29 stellt man das Rohstück des Werkzeuges 14 in einem geforderten Winkel zum Ritzel 12 und Zahnrad 13 ein. Mittels der Leitspindel 21 bewegt man den Werkzeugträger 17 in die erforderliche (berechnete) Stellung des Werkzeuges 14. Die Feder 18 drückt das Stirnende der Schleifscheibe, die als Rohstück des Werkzeuges 14 benutzt wird, an den Aussenkegel des Ritzels 12 und des Zahnrades 13 an. Die Stellmutter 20 bringt man an der Schraube 19 in die Stellung, die den Axialhub der Spindel 15 auf den Abstand gewährleistet, der der vollen Zahnhöhe des Musterpaares gleich ist. Durch Drehen der Leitspindel 33 (Fig. 2) stellt man die berechnete Hypoidverschiebung des Rohstücks des Werkzeuges 14 gegenüber dem Zahnrad 13 ein, während man durch Drehen des Griffs 38 (Fig. 3), d.h. durch die senkrechte Verschiebung des Ständers 37 zusammen mit dem Spindelstock 2, die Hypoidverschiebung des Ritzels 12 gegenüber dem Rohstück des Werkzeuges 14 einstellt. Damit ist das Einrichten des Werkzeugmaschine beendet. Zur Anfertigung des Werkzeuges 14 schaltet man die Elektromotoren 8 und 11 (Fig. 1) ein, die das Ritzel 12 und das Zahnrad 13 mit einer exakt vorgegebenen Übersetzungszahl drehen. Der Berührungszone der Zähne des Ritzels 12 und des Zahnrades 13 und des Rohstücks des Werkzeuges 14 wird ein freies Schleifmittel zugeführt. In Anbetracht dessen, dass die Zähne des Ritzels 12 und des Zahnrades 13 das Drehmoment zum Rohstück des Werkzeuges 14 gleichzeitig und beiderseits seiner Diametralebene übertragen, geschieht kein Schlupf an der Berührungsstelle zwischen den Zähnen des Paares und dem Rohstück des Werkzeuges 14. Dank des freien Schleifmittels erfolgt unter der Wirkung der sich berührenden Zähne des Ritzels 12 und des Zahnrades 13 das Ausbröckeln der Schleifmittelkörner aus dem vollen Schleifmittelrohstück des Werkzeuges 14, wodurch die zusammenpassenden Zähne gleichzeitig zweier konzentrisch liegender Zahnkränze des Werkzeuges 14 geformt werden. Unter der Wirkung der Feder 18 wird mit dem fortschreitenden Ausbröckeln der Schleifmittelkörner das Rohstück des Werkzeuges 14 vorwärts bis zum Anschlag der Begrenzermutter 20 gegen das Stirnende des Werkzeugträgers 17 vorgeschoben. Damit ist die Anfertigung des Werkzeuges 14 beendet.

Die Arbeit der Werkzeugmaschine im Betrieb der Fertigbearbeitung einer Partie von Zahnradgetrieben unterscheidet sich dadurch, dass man an den Spindeln 4 und 5 die zu bearbeitenden Räder 12 und 13 anordnet und das Werkzeug 14 durch die Zähne seiner Zahnkränze mit den Zähnen der zu bearbeitenden Räder 12 und 13 in Eingriff bringt. An Stelle des freien Schleifmittels wird in den Eingriff zwischen den Zähnen des Werkzeuges 14 und den Zähnen der zu bearbeitenden Räder 12 und 13 ein Schmier- und Kühlmittel eingeleitet, damit dem Verschmieren des Werkzeuges 14 vorgebeugt wird und die Bearbeitungsprodukte ausgewaschen werden. Bearbeitet wird unter tangentialem (d.h. Umfangs-) Vorschub, der von den Elektromotoren 8 und 11 sichergestellt wird.

Auf der angemeldeten Werkzeugmaschine werden zwei Varianten des Abrichtens des Schleifwerkzeuges 14 durchgeführt: erstens, ein periodisches Abrichten des Werkzeuges 14 nach dessen Verlusst der geometrischen Genauigkeit und, zweitens, das Abrichten des Werkzeuges nach der Abnutzung der Arbeitsoberfläche bis zur Zuspitzung der Zahnkronen .

Die Wiederherstellung der geometrischen Genauigkeit der Zahnkränze des Werkzeuges 14 erfolgt mittels des Ritzels 12 und des Zahnrades 13 eines Musterzahnradtriebs, mit dem das Werkzeug 14 gefertigt (gerändelt) wurde, oder mittels eines Zahnradtriebes, das nach seinen Kennwerten dem Musterzahnradtrieb ähnlich ist, aber eine auf die Zahnoberfläche aufgebrachte Diamantschicht aufweist. Das Abrichten erfolgt unter tangentialer Belastung ebenso wie bei der Fertigbearbeitung. Im Falle der Verwendung des Ritzels 12 und des Zahnrades 13 als Abrichtwerkzeug wird in die Eingriffszone der Kränze des Zahnradgetriebes und der Kränze des Schleifwerkzeuges 14 ein freies Schleifmittel gegeben. Bei der Verwendung eines Zahnradtriebes mit aufgebrachter Diamantschicht wird in die Eingriffszone ein Schmier- und Kühlmittel gegeben.

Das Abrichten des Werkzeuges 14 zur Wiederherstellung der abgenutzten Zähne ist ganz identisch der oben beschriebenen Technologie der Anfertigung des Schleifwerkzeuges 14. In diesem Falle bewegt man die Mutter 20 an der Schraube 19 und vergrössert man somit den Axialhub des Werkzeugträgers 15 auf einen Wert, der notwendig ist, um die volle Zahnhöhe der Zahnkränze des Schleifwerkzeuges 14 zu formen. Das periodische Abrichten zur Wiederherstellung der abgenutzten Zähne des Werkzeuges 14 wird durchgeführt, bis die Dicke der Standardschleifscheibe vollständig ausgenutzt ist. Dabei ist zu bemerken, dass ein solches Abrichten ausser der Axialstellung der Werkzeugspindel 15 keine anderen Einstellungen der Werkzeugmaschine betrifft.

Gewerbliche Verwertbarkeit

Die Anwengung der vorliegenden technischen Lösung ermöglicht zum ersten Mal in der Weltpraxis die Durchführung auf einer Werkzeugmaschine von vier Arbeitsgängen, die zur Zeit unter Einsatz von zahlreichen verschiedenartigen und komplizierten Ausrüstungen durchgeführt werden. Die zum Patent angemeldete Werkzeugmaschine zum Herstellen und Abrichten eines Werkzeuges und Fertigbearbeiten von Zahnrädern, in der die vorliegende Erfindung realisiert ist, gestattet:

- die Anfertigung eines präzisen Schleifwerkzeuges mit kompliziertem Profil, dessen Zähne mit den Zähnen der zu bearbeitenden Räder in bester Weise zusammenpassen;

- die periodische Durchführung des Abrichtens dieses Werkzeuges, falls es seine geometrische Genauigkeit verloren hat;

- die Wiederherstellung der abgenutzten Zähne des Werkzeuges bis zur vollen Ausnutzung der Dicke einer Standartschleifscheibe;

- die Fertigbearbeitung von Präzisionszahnradtrieben, d.h. die gleichzeitige Bearbeitung eines zusammenpassenden Ritzel-Zahnrad-Paares, mit einer Leistung, die mindestens zweimal so hoch wie die einer beliebigen der bestehenden Werkzeugmaschinen ähnlicher Zweckbestimmung ist.

Die Werkzeugmaschine ist einfach zu bedienen. Der Übergang von einer Arbeit, beispielsweise der Formung eines formschwierigen Schleifwerkzeuges, zu einer anderen, beispielsweise der Fertigbearbeitung von Zahnradtrieben, erfolgt praktisch ohne arbeitsintensive Umrüstungen.

Dank diesen Besonderheiten findet die Werkzeugmaschine in Betrieben praktisch mit beliebiger Produktionsart von der Einzel- und Kleinserien- bis zur Großserienfertigung breite Anwendung.

PATENTANSPRÜCHE

1. Werkzeugmaschine zum Herstellen und Abrichten eines Werkzeugs und Fertigbearbeiten von Zahnrädern, enthaltend eine erste (4) und eine zweite Spindel (5) mit synchron miteinander gekoppelten Eigenantrieben (8 bzw. 11), welche Spindeln in jeweils einem Spindelstock (2 bzw. 3) befestigt sind; dadurch g e k e n n z e i c h n e t, daß die Werkzeugmaschine mit einer dritten Spindel (15) versehen ist, die frr drehbar und axial in einem eigenen Werkzeugträger (17) verschiebbar untergebracht ist, welcher in vertikaler und horizontaler Richtung radial verschiebbar und um einen vorgegebenen Winkel schwenkbar ange· ordnet ist.

2. Werkzeugmaschine nach Anspruch 1, dadurch g e k e n n z e i c h n e t daß die Werkzeugmaschine mit einer Platte (23) versehen ist, auf der der Träger (17) der dritten Spindel (15) in vertikaler und horizonta ler Richtung radial verschiebbar angeordnet ist, wobei die Platte (23) mit den Spindelstöcken (2, 3) der ersten und der zweiten Spinde (4 bzw. 5) winkelbewegbar kinematisch verbunden ist.

FIG. 2

FIG. 3

# INTERNATIONAL SEARCH REPORT

International Application No PCT/SU 88/00192

**I. CLASSIFICATION OF SUBJECT MATTER** (if several classification symbols apply, indicate all) [6]

According to International Patent Classification (IPC) or to both National Classification and IPC

IPC[4]    B 23 F 19/00, B 24 B 53/06

**II. FIELDS SEARCHED**

| Minimum Documentation Searched [7] | |
|---|---|
| Classification System | Classification Symbols |
| IPC[4] | B 23 F 19/00, 19/02, B 24 B 53/06 |

Documentation Searched other than Minimum Documentation
to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | US, A, 2996847, (Illinois Tool Works) 22 August 1961 (22.08.61) see figure 1, the claims | 1-2 |
| A | DE, A1, 3508065, (Illinois Tool Works) 19 September 1985 (19.09.85), see figures 2,3, the claims | 1-2 |
| A | DE, C1, 3336593, (Carl Hurth Maschinen- und Zahnradfabrik GmbH & Co.) 4 October 1984 (04.10.84) | 1-2 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 21 February 1989 (21.02.89) | 1 March 1989 (01.03.89) |
| International Searching Authority | Signature of Authorized Officer |
| ISA/SU | |

Form PCT/ISA/210 (second sheet) (January 1985)